# EUROPEAN PATENT SPECIFICATION

(11) **EP 1 926 115 B1**
(45) Date of publication and mention of the grant of the patent: **11.05.2011**
(21) Application number: 07019435.2
(22) Date of filing: 04.10.2007
(51) Int. Cl.: H01H 19/63, H01H 19/635, G04C 3/00, H01H 19/48, H01H 19/00

(54) **Two-way key of portable terminal**
Zweiwege-Taste für ein tragbares Endgerät
Bouton-poussoir bidirectionnel pour terminal portable

(30) Priority: 21.11.2006 KR 20060115094
(43) Date of publication of application: 28.05.2008
(73) Proprietor: Samsung Electronics Co., Ltd., Suwon-si, Gyeonggi-do (KR)
(72) Inventor: Kim, Ki-Bum, Suwon-si Gyeoniggi-do (KR); Bae, Kwang-Jin, Suwon-si Gyeoniggi-do (KR)
(74) Representative: Lang, Johannes

(56) References cited:
- WO-A-03/043040
- DE-A1- 3 102 404
- DE-A1- 4 213 131
- DE-C1- 4 436 417
- US-A- 3 892 931

## Description

### BACKGROUND OF THE INVENTION

### 1. Field of the Invention:

The present invention relates to a key of a portable terminal. More particularly, the present invention relates to a two-way key of a portable terminal used for controlling the output sound volume, shifting menu items, or the like.

### 2. Description of the Related Art:

In general, the term "portable terminal" refers to a device used to provide wireless communication between users. The term may also refer to a device used to provide wireless communication between a user and a service provider using a mobile communication station or the like, which provides the user with various types of contents including a voice call service, short text message transmission, mobile banking, watching television, online games, video-on-demand, and so forth.

Portable terminals are classified into bar-type terminals, flip-type terminals, and folder-type terminals according to their appearance. The bar-type terminals have a communication circuit, and input/output means, such as a transmitter unit and a receiver unit, all of which are mounted on a single housing. The flip-type terminals have a flip cover assembled on a bar-type terminal and the folder-type terminals are opened/closed by pivoting a pair of housings with which an input device and an output device are provided, respectively. In addition, sliding-type terminals have recently appeared. The sliding-type terminals and the folder-type terminals are very popular and many efforts have been made to satisfy diverse tastes of users while improving the portability and the convenience of using these types of terminals.

Recently, mobile communication services, including the providing of games and moving picture file transmissions to the portable terminals through online services, mobile banking, video-on-demand, and digital multimedia broadcasting, or the like, are being increasingly diversified. The diversification of the mobile communication services is being caused by an environment in which use of the portable terminals is very common. That is, as use of portable terminals increases and user's needs become diverse, services for providing various contents through the portable terminals are being similarly diversified and commercialized.

With the continuous efforts on making terminals having a compact size, watch-type portable terminals have appeared Efforts for commercializing the watch-type portable terminals have also been continuous. The watch-type portable terminals include a microphone and a speakerphone for inputting/outputting audio information, a display device and a keypad for inputting/outputting text information, or the like. However, function keys that are used for searching information and for shifting and selecting menu items need to be positioned on the watch-type portable terminal so that a considerable problem occurs in making the terminal to be compact enough to wear it on a wrist.

US 3892931 (A) discloses that a switch having planar contacts and a rotary brush engageable with the contacts to perform a switching function has printed circuit board mounting lugs integral with planar contact circuitry. The lugs allow mounting of the switch to the edge of the printed circuit board and is of miniature size suitable for use with a watch stem of an electronic wristwatch. Tactile feel and positive detent of the switch rotor is provided with a resilient beam which detents against the irregular surface of a cam provided on the rotor. The cam has an offset finger that resiliently deflects a return spring which returns the switch rotor to an off position providing only a momentary switching function when the rotor is manually rotated and then released.

Also, the input/output device such as a keypad needs to be operated by a user's hand so that there is a limitation in making the watch-type portable terminals in a compact size. That is, if a size of a key is excessively small, a problem occurs that another key is additionally operated upon operating a key desired by a user. In addition, a two-way key used for shifting the menu items or the like should be provided with a switch member, a key button, or the like, respectively, so that a sufficient space must be secured, thereby causing a difficulty in making the terminal in a compact size.

### SUMMARY OF THE INVENTION

An aspect of the present invention according to claim 1 is to address at least the above-mentioned problems and/or disadvantages occurring in the prior art and to provide at least the advantages described below. Accordingly, an aspect of the present invention is to provide a two-way key which can be easily employed in a compact terminal, including a watch-type portable terminal.

Another aspect of the present invention is to provide a two-way key capable of operating a pair of switch members by rotating a single key.

Yet a further aspect of the present invention is to provide a two-way key which can contribute in making a portable terminal in a compact size.

In accordance with an aspect of the present invention, a two-way key of a portable terminal is provided. The two-way key includes a fixed member mounted on the portable terminal, a driving member rotatably assembled with the fixed member and an operating member pivotably assembled with the fixed member, wherein, as the driving member rotates, the driving member comes into contact with the operating member and causes the operating member to pivot.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is an exploded perspective view illustrating a two-way key of a portable terminal according to an exemplary embodiment of the present invention;
FIG. 2 is an exploded perspective view illustrating a driving member of the two-way key of FIG. 1 and a rotation grip, which are assembled with each other;
FIG. 3 is a perspective view illustrating the driving member of FIG. 2 assembled with a rotary knob;
FIG. 4 is a perspective view illustrating an operation member of the two-way key of FIG. 1;
FIG. 5 is a perspective view illustrating an assembled two-way key of FIG. 1;
FIG. 6 is a side view illustrating the two-way key of FIG. 1 prior to being assembled;
FIG. 7 is a side view illustrating the two-way key of FIG. 1 operated to one side; and
FIG. 8 is a side view illustrating the two-way key of FIG. 1 operated to the other side.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions, constructions and configurations are omitted for clarity and conciseness.

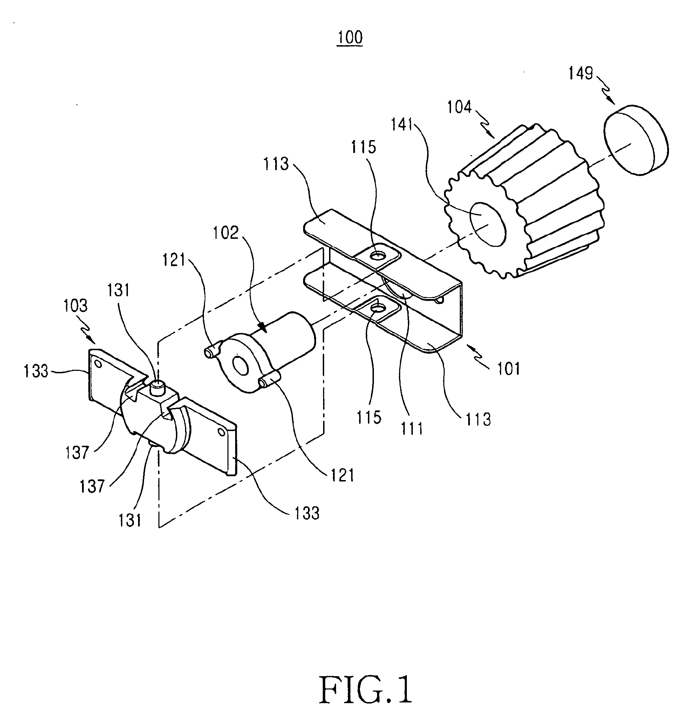

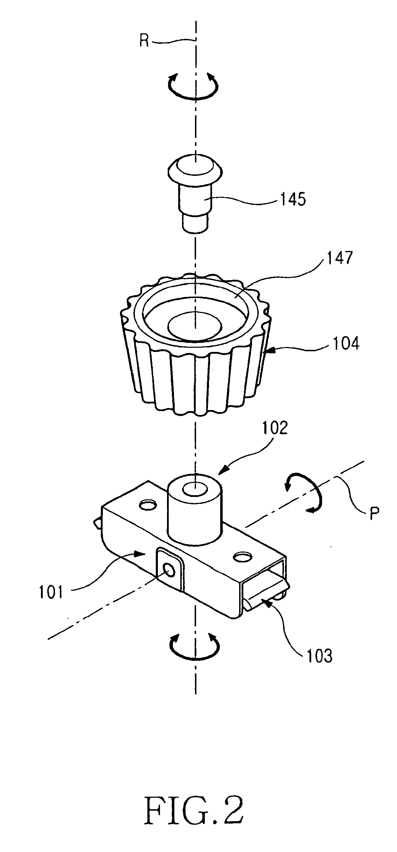

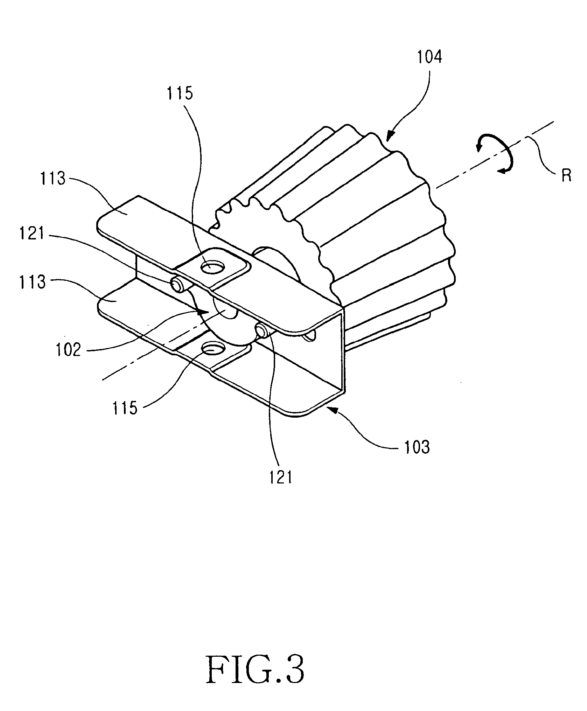

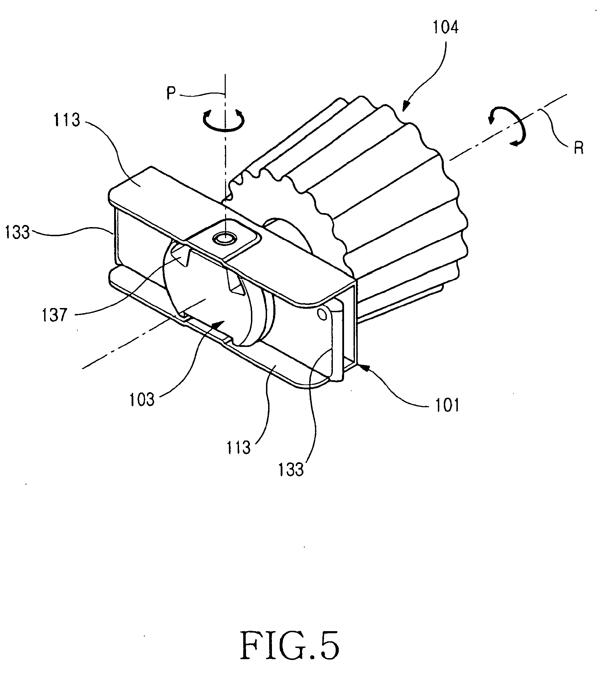

As shown in FIGs. 1 to 5, a two-way key 100 of a portable terminal according to an exemplary embodiment of the present invention includes a driving member 102 and an operating member 103, which are positioned on the terminal and are assembled with a base 101. That is, the base 101 is fixed on the terminal so that the driving member 102 and the operating member 103 are positioned on the terminal.

The base 101 is shaped like a plate and includes a pair of support ribs 113 which are formed by bending both sides thereof to face each other. The base includes a rotation hole 111 with which the driving member 102 is engaged. The support ribs 113 extend along a rotation axis R direction of the driving member 102 while facing each other, and pivot holes 115 are formed in each of the support ribs 113. A plurality of pivot pins 131 are formed in the operating member 103 and are each rotatably engaged with a pivot hole 115.

The driving member 102 is shaped like a cylinder extending in one direction, and includes, at an end thereof, a pair of driving protrusions 121. The driving member 102 is engaged with the rotation hole 111 and rotates on the base 101. The driving protrusions 121 extend in the direction of the rotation axis R and are positioned symmetrically relative to the rotation axis R. As the driving member 102 rotates, the driving protrusions 121 swivel around the rotation axis R.

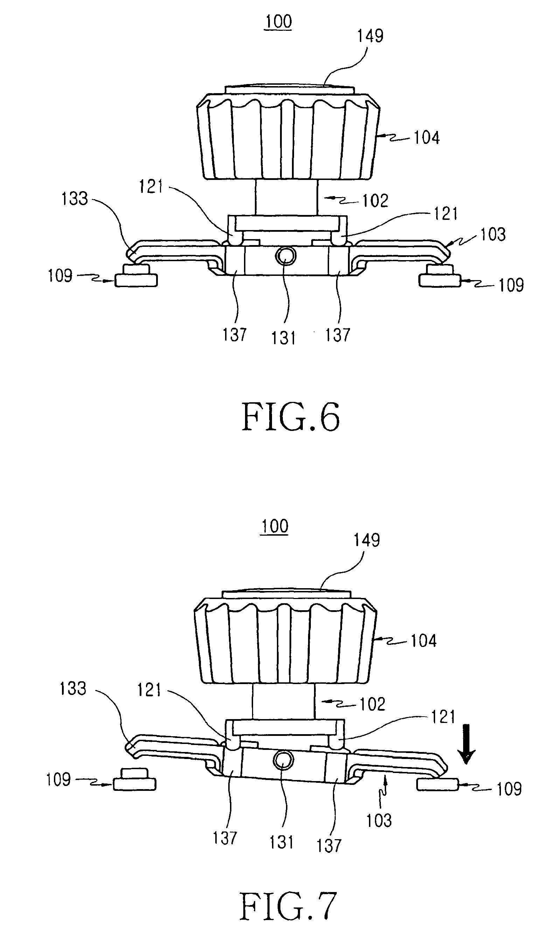

The operating member 103 extends in a vertical direction relative to the rotation axis R, and both sides thereof are symmetrical to each other centering on the rotation axis R. Both sides of the operation member 103 are respectively provided with a protrusion portion capable of operating a switch member 109 (shown in FIG. 6) including a tact switch, a dome switch and the like. The pivot pins 131 each protrude from a side of the operating member 103 and are each rotatably engaged with a pivot hole 115 of the base 101 so as to form a pivot axis P.

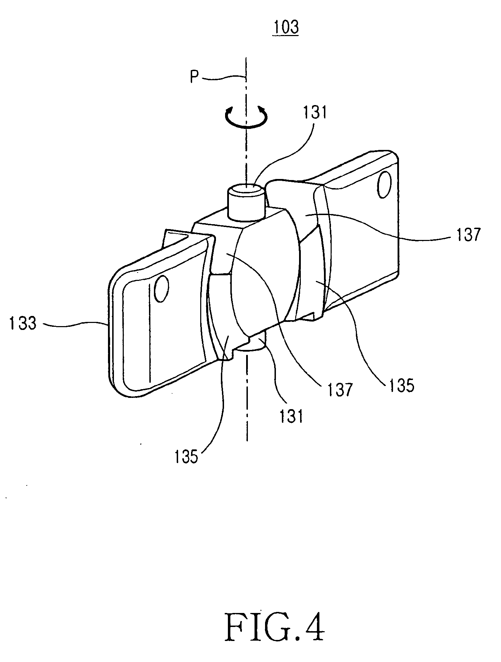

A pair of inclined surfaces 135 (shown in FIG. 4) corresponding to the driving protrusions 121 is formed at the other surface of the operating member 103. The inclined surfaces 135 are formed in a shape of a circular arc within a range of a predetermined angle along a trace of the driving protrusions 121 formed by rotation of the driving member 102. If the driving member 102 rotates in a clockwise or counterclockwise direction, any one of the driving protrusions 121 comes into contact with the corresponding inclined surface 135 and then rotates the operating member 103. Additionally, a pair of escaping grooves 137 is formed in the operating member 103. Each of the escaping grooves 137 contacts one end of a respective inclined surface 135 and is positioned on a movement trace of a driving protrusion 121.

Regarding the escaping grooves 137, if the driving member 102 rotates and any one of the driving protrusions 121 comes into contact with the inclined surface 135, the operating member 103 pivots. At this time, the other driving protrusion 121 may make contact with the operating member 103. If the other driving protrusion 121 makes contact with the operating member 103, the pivot of the operating member 103 can not be performed smoothly. In this situation, if the one driving protrusion 121 comes into contact with the inclined surface 135, the escaping groove 137 provides a space for the other driving protrusion 121 to be positioned, thereby allowing it to smoothly pivot. That is, the escaping grooves 137 provide a space in which one of the driving protrusions 121 can be positioned upon rotation of the driving member 102.

The switch members 109 operated by the two-way key 100 include a pair of switch members, each of which faces one side of the operating member 103. Specifically, the operating member 103 includes protrusion portions 133 which are formed on lateral edges of the operating member 103. The protrusion portions 133 may be formed by bending lateral edges of the operating member 103. If the operating member 103 pivots, any one of the protrusion portions 133 operates the corresponding switch member 109, and the other protrusion portion 133 moves away from the corresponding switch member 109 as illustrated in FIG. 7.

In the meantime, in order to easily rotate the driving member 102, a rotary knob 104 can be mounted at an end of the driving member 102. The rotary knob 104 is provided with a plurality of grooves arranged in a peripheral surface thereof along a circumferential direction in order to prevent slippage when operating the knob.

A connection hole 141 having a shape corresponding to that of an end of the driving member 102 is formed in one surface of the rotary knob 104, and a fastening space 147 is formed in the other surface of the rotary knob 104. A fastening member 145, such as a screw, is fastened through the fastening space 147 and is engaged with the end of the driving member 102 so that the rotary knob 104 is fixed to the end of the driving member 102. The driving member 102 passes through the rotation hole 111 of the base 101, and the end thereof is assembled with the rotary knob 104 in such a manner that the base 101 is restricted between the driving protrusions 121 and the rotary knob 104. According to an exemplary embodiment of the present invention, the end of the driving member 102 and the connection hole 141 are each shaped like a circle. However, in an exemplary implementation, the driving member 102 has at least one plane in the peripheral surface of the end thereof, and the connection hole 141 is also made as a shape corresponding to that of the end of the driving member 102 in order to prevent the rotary rob 104 and the driving member 102 from slipping relative to each other when the rotary knob 104 rotates.

The fastening space 147 of the rotary knob 104 is covered by a decorative cover 149. Therefore, a head portion of the fastening member 145 is also covered by the decorative cover 149 so that it is not exposed to an exterior appearance of the two-way key 100, ultimately to an exterior appearance of the terminal in which the two-way key is mounted.

FIGs. 6 to 8 illustrate views in which the two-way key 100 is mounted, the switch member 109 positioned at one side of the operating member is operated, and the switch member 109 positioned at the other side of the operating member is operated, respectively. Here, the base 101 is omitted for clarity and conciseness so as to illustrate the operations of the two-way key 100 in FIGs. 6 to 8.

Referring to FIG. 6, a pair of switch members 109 is positioned at lower sides of the two-way key 100, especially at locations corresponding to the protrusion portions 133 of the operating member 103, respectively. The operating member 103 is symmetrically centered on not only the rotation axis R, but also the pivot axis P, and the switch members 109 are also symmetrically centered on the pivot axis P. The switch members 109 can include a dome switch or a tact switch employed in common portable terminals.

As illustrated in FIG. 6, if the two-way key 100 is not operated, the operating member 103 maintains a horizontal state, and the switch members 109 are not operated.

As illustrated in FIG. 7, if a user rotates the rotary knob 104 in a counterclockwise direction, the right driving protrusion 121 comes into contact with the inclined surface 135 and then rotates the operating member 103. At this time, the left driving protrusion 121 is positioned in the escaping groove 137 by rotation of the rotary knob 104 so that it does not contact the inclined surface 135, even though the operating member 103 pivots. As the right driving protrusion 121 contacts the inclined surface 135, the operating member 103 pivots to make the right protrusion portion 133 move downward so as to operate the switch member 109.

At this time, by controlling the inclination of the inclined surface 135, it is possible to set the rotation angle of the rotary knob 104, i.e., the driving member 102, which is required by the operating member 103 from when it starts to pivot to when it starts to operate the switch member 109. As the inclination of the inclined surface 135 is increased, the rotation angle of the driving member 102 required to reach the position where the switch member 109 is operated is decreased. In the meantime, as the inclination of the inclined surface 135 is decreased, the rotation angle of the driving member 102 required to reach the position where the switch member 109 is operated is increased. In an exemplary embodiment of the invention, the inclination of the inclined surface 135 is set for any one of the switch members 109 to be operated when the rotary knob 104 rotates in a clockwise or counterclockwise direction by approximately 40 degrees from an initial position.

The fact that the rotation angle of the driving member 102 required for operating the switch can be controlled by controlling the inclination of the inclined surface 130 should be easily understood by those skilled in the art.

If a user rotates the rotary knob 104 in a clockwise direction from a state of the right switch member 109 being operated, the switch member 109 is restored to an initial shape thereof, and the operating member 103 pivots to be in the horizontal state.

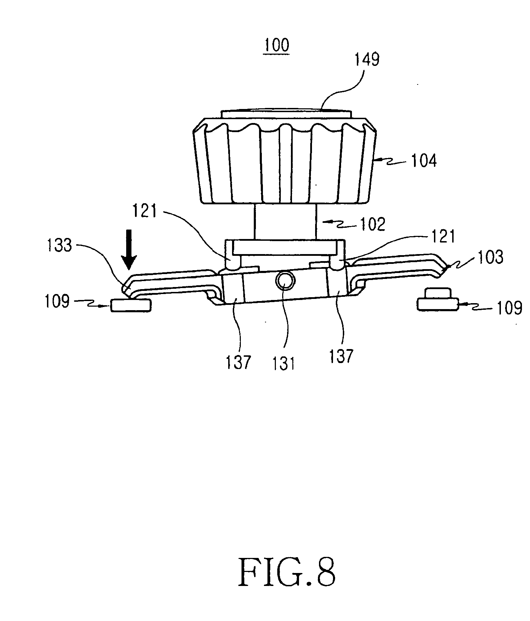

When a user desires to operate the left switch member 109, the user rotates the rotary knob 104 in a clockwise direction from the initial position. If the rotary knob 104 rotates in a clockwise direction from the initial position, the left driving protrusion 121 comes into contact with the inclined surface 135 and the right driving protrusion 121 is positioned in the escaping groove 137. Accordingly, as shown in FIG. 8, the operating member 103 pivots in a direction in which the left protrusion portion 133 contacts the switch member 109, and the left switch member 109 is operated.

In an exemplary implementation, the two-way key 100 configured as discussed above is mounted on a side of a housing of the portable terminal, for example a watch-type portable terminal, and it can perform two-way operation while taking a small mounting space so that it is suitable for a compact terminal..

As described above, an exemplary two-way key of the present invention can rotate the operating member in two ways by using rotation of the driving member, so there is an advantage that it can configure a key capable of operating in two ways while taking a small space. That is, the two-way key is configured to perform the two-way operation with a single key so that it contributes to the compact size of the terminal. Further, if the two-way key is employed in the watch-type portable terminal, the operating scheme is substantially similar to that of a spring of a common analog wrist watch or a time control lever, so that it is familiar to a user and thus it is convenient for use.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A two-way key (100) of a portable terminal, comprising:
a fixed member (101) mounted on the portable terminal;
a driving member (102) rotatably coupled to the fixed member; and
an operating member (103) pivotably coupled to the fixed member,
**characterized in that**
a pair of driving protrusions (121) formed on the driving member; and
a pair of inclined surfaces (135) formed on the operating member, wherein, as the driving member (102) rotates, one of the driving protrusions (121) comes into contact with a corresponding inclined surface (135) of the operating member (103) so as to pivot the operating member.

2. The two-way key as claimed in claim 1, further comprising a plurality of tact switches, each of the plurality of tact switches positioned on a lateral side of a pivot axis (P) of the operating member (103), wherein, as the operating member pivots, at least one of the plurality of tact switches is operated.

3. The two-way key as claimed in claim 1, further comprising a plurality of dome switches, each of the plurality of dome switches positioned on a lateral side of a pivot axis (P) of the operating member (103), wherein, as the operating member pivots, at least one of the plurality of dome switches is operated.

4. The two-way key as claimed in claim 1, further comprising a plurality of escaping grooves (137) formed on the operating member (103), each of the escaping grooves contacting an end of one of the pair of inclined surfaces (135) and positioned on a movement trace of one of the pair of driving protrusions (121), respectively.

5. The two-way key as claimed in claim 4, wherein, if one of the driving protrusions (121) comes into contact with the respective inclined surface (135) by rotating of the driving member (102), the escaping groove (137) provides a space in which the other driving protrusion can be positioned.

6. The two-way key as claimed in claim 1, further comprising:
a pair of support ribs (113) formed on a base of the fixed member (101) and extending while facing each other;
a plurality of pivot holes (115), each of the plurality of pivot holes formed on one of the pair of support ribs, respectively; and
a plurality of pivot protrusions (131), each of the plurality of pivot protrusions formed on one side of the operating member (103), respectively,
wherein the pivot protrusions are rotatably coupled with the pivot holes, respectively.

7. The two-way key as claimed in claim 6, further comprising a rotary knob (104) coupled to an end of the driving member (102), wherein the driving member passes through the base of the fixed member (101) so as to be assembled with the rotary knob.

8. The two-way key as claimed in claim 7, wherein the rotary knob (104) is coupled to the end of the driving member (102) by a screw (145).

9. The two-way key as claimed in claim 8, wherein the screw (145) passes through the rotary knob (104) from an end of the rotary knob so as to be coupled to the driving member (102).

10. The two-way key as claimed in claim 9, further comprising a decoration cover (149) mounted at the end of the rotary knob (104) for covering a portion to which the screw (145) is coupled.

11. The two-way key as claimed in claim 1, further comprising a plurality of switch members (109), each of the plurality of switch members positioned on a side of the operating member (103) and positioned symmetrically centering on a pivot axis (P) of the operating member, wherein, as the operating member pivots, one of the switch members is operated.

12. The two-way key as claimed in claim 11, wherein, if the driving member (102) rotates by approximately 40 degrees, the operating member (103) pivots and operates at least one of the plurality of switch members (109).

13. A portable terminal including a two-way key (100) according to claim 1.

14. The portable terminal as claimed in claim 13, further comprising a plurality of switches, each of the plurality of switches positioned on a lateral side of a pivot axis (P) of the operating member (103), wherein, as the operating member pivots, at least one of the plurality of switches (109) is operated.

15. The portable terminal as claimed in claim 14, wherein each of the plurality of switches (109) comprises at least one of a tact switch and a dome switch.

16. The portable terminal as claimed in claim 13, further comprising a plurality of escaping grooves (137) formed on the operating member (103), each of the escaping grooves contacting an end of one of the pair of inclined surfaces (135) and positioned on a movement trace of one of the pair of driving protrusions (121), respectively.

17. The portable terminal as claimed in claim 16, wherein, if one of the driving protrusions (121) comes into contact with the respective inclined surface (135) by rotating of the driving member, the escaping groove (137) provides a space in which the other driving protrusion can be positioned.

18. The portable terminal as claimed in claim 13, further comprising:
a pair of support ribs (113) formed on a base of the fixed member (101) and extending while facing each other;
a plurality of pivot holes (115), each of the plurality of pivot holes formed on one of the pair of support ribs, respectively; and
a plurality of pivot protrusions (131), each of the plurality of pivot protrusions formed on one side of the operating member (103), respectively,
wherein the pivot protrusions are rotatably coupled with the pivot holes, respectively.

## Patentansprüche

1. Zweiwege-Taste (100) für ein tragbares Endgerät, aufweisend:
ein Befestigungsbauteil (101), das an dem tragbaren Endgerät montiert ist;
ein Antriebsbauteil (102), das drehbar mit dem Befestigungsbauteil gekoppelt ist; und
ein Betriebsbauteil (103), das schwenkbar mit dem Befestigungsbauteil gekoppelt ist,
**dadurch gekennzeichnet, dass**
ein Paar Antriebsvorsprünge (121), die auf dem Antriebsbauteil ausgebildet sind; und
ein Paar geneigte Oberflächen (135), die auf dem Betriebsbauteil ausgebildet sind,
wobei, wenn das Antriebsbauteil (102) rotiert, kommt einer der Antriebsvorsprünge (121) in Kontakt mit einer korrespondierenden geneigten Oberfläche (135) des Betriebsbauteils (103), so dass das Betriebsbauteil geschwenkt wird.

2. Zweiwege-Taste nach Anspruch 1, weiterhin aufweisend eine Mehrzahl an Taktschaltern, wobei jeder der Mehrzahl an Taktschaltern auf einer seitlichen Seite einer Schwenkachse (P) des Betriebsbauteils (103) angeordnet ist, wobei, wenn das Betriebsbauteil schwenkt, mindestens einer aus der Mehrzahl von Taktschaltern betrieben wird.

3. Zweiwege-Taste nach Anspruch 1, weiterhin aufweisend eine Mehrzahl an Kuppelschaltern, wobei jeder der Mehrzahl an Kuppelschaltern auf einer seitlichen Seite einer Schwenkachse (P) des Betriebsbauteils (103) angeordnet ist, wobei, wenn das Betriebsbauteil schwenkt, mindestens einer aus der Mehrzahl von Kuppelschaltern betrieben wird.

4. Zweiwege-Taste nach Anspruch 1, weiterhin aufweisend eine Mehrzahl an Fluchtnuten (137), die an dem Betriebsbauteil (103) ausgebildet sind, wobei jede der Fluchtnuten ein Ende von einem des Paars von geneigten Oberflächen (135) kontaktiert, bzw. auf einer Bewegungsspur eines des Paars von Antriebsvorsprüngen (121) positioniert ist.

5. Zweiwege-Taste nach Anspruch 4, wobei, wenn einer der Antriebsvorsprünge (121) in Kontakt mit der jeweiligen geneigten Oberfläche (135) durch Drehung des Antriebsbauteils (102) kommt, stellt die Fluchtnut (137) einen Raum bereit, in welchem der andere Antriebsvorsprung positioniert werden kann.

6. Zweiwege-Taste nach Anspruch 1, weiterhin aufweisend:
ein Paar Stützrippen (113), die auf einer Basis des Befestigungsbauteils (101) ausgebildet sind und sich erstrecken, während sie sich gegenüberstehen;
eine Mehrzahl an Schwenklöchern (115), wobei jedes der Mehrzahl an Schwenklöchern jeweils auf einem des Paars Stützrippen ausgebildet ist,
eine Mehrzahl an Schwenkvorsprüngen (131), wobei jeder der Mehrzahl an Schwenkvorsprüngen jeweils auf einer Seite des Betriebsbauteils (103) ausgebildet ist,
wobei die Schwenkvorsprünge jeweils drehbar mit den Schwenklöchern gekoppelt sind.

7. Zweiwege-Taste nach Anspruch 6, weiterhin aufweisend einen Drehknopf (104), der an ein Ende des Antriebsbauteils (102) gekoppelt ist, wobei das Antriebsbauteil durch die Basis des Befestigungsbauteils (101) passiert, so dass es mit dem Drehknopf zusammengefügt wird.

8. Zweiwege-Taste nach Anspruch 7, wobei der Drehknopf (104) mit dem Ende des Antriebsbauteils (102) durch eine Schraube (145) gekoppelt ist.

9. Zweiwege-Taste nach Anspruch 8, wobei die Schraube (145) von einem Ende des Drehknopfs durch den Drehknopf (104) passiert, so dass er mit dem Antriebsbauteil (102) gekoppelt wird.

10. Zweiwege-Taste nach Anspruch 9, weiterhin aufweisend eine Dekorationsabdeckung (149), die auf das Ende des Drehknopfs (104) montiert ist, zum Abdecken eines Abschnitts, an welchem die Schraube (145) gekoppelt ist.

11. Zweiwege-Taste nach Anspruch 1, weiterhin aufweisend eine Mehrzahl an Schalterbauteilen (109), wobei jedes der Mehrzahl an Schalterbauteilen auf einer Seite des Betriebsbauteils (103) positioniert ist und symmetrisch auf einer Schwenkachse (P) des Betriebsbauteils mittig positioniert ist, wobei, wenn das Betriebsbauteil schwenkt, einer der Schalterbauteile betrieben wird.

12. Zweiwege-Taste nach Anspruch 11, wobei, falls das Antriebsbauteil (102) sich um ungefähr 40° dreht, schwenkt das Betriebsbauteil (103) und betätigt mindestens einen aus der Mehrzahl von Schalterbauteilen (109).

13. Tragbares Endgerät, das eine Zweiwege-Taste (100) gemäß Anspruch 1 aufweist.

14. Tragbares Endgerät nach Anspruch 13, weiterhin aufweisend eine Mehrzahl an Schaltern, wobei jeder der Mehrzahl an Schaltern auf einer seitlichen Seite einer Schwenkachse (P) des Betriebsbauteils (103) positioniert ist, wobei, wenn das Betriebsbauteil schwenkt, mindestens einer aus der Mehrzahl der Schalter (109) betätigt wird.

15. Tragbares Endgerät nach Anspruch 14, wobei jeder der Mehrzahl an Schaltern (109) mindestens einen aus einem Taktschalter und einem Kuppelschalter aufweist.

16. Tragbares Endgerät nach Anspruch 13, weiterhin aufweisend eine Mehrzahl an Fluchtnuten (137), die auf dem Betriebsbauteil (103) ausgebildet sind, wobei jede der Fluchtnuten ein Ende von einem des Paars an geneigten Oberflächen (135) kontaktiert bzw. auf einer Bewegungsspur von einem des Paars von Antriebsvorsprüngen (121) positioniert ist.

17. Tragbares Endgerät nach Anspruch 16, wobei, falls einer der Antriebsvorsprünge (121) in Kontakt mit der jeweiligen geneigten Oberfläche (135) durch Drehen des Antriebsbauteils kommt, stellt die Fluchtnut (137) einen Raum bereit, in welchem der andere Antriebsvorsprung positioniert werden kann.

18. Tragbares Endgerät nach Anspruch 13, weiterhin aufweisend:
ein Paar Stützrippen (113), die an einer Basis des Befestigungsbauteils (101) ausgebildet sind und sich erstrecken, während sie sich gegenüberstehen;
eine Mehrzahl an Schwenklöchern (115), wobei jedes der Mehrzahl an Schwenklöchern jeweils auf einem des Paars an Stützrippen ausgebildet ist; und
eine Mehrzahl an Schwenkvorsprüngen (131), wobei jeder der Mehrzahl an Schwenkvorsprünge jeweils auf einer Seite des Betriebsbauteils (103) ausgebildet ist,
wobei die Schwenkvorsprünge jeweils mit den Schwenklöchern drehbar gekoppelt sind.

## Revendications

1. Touche à double sens (100) d'un terminal portable, comprenant un organe fixe (101) monté sur le terminal portable, un organe d'entraînement (102) couplé à rotation avec l'organe fixe, et un organe de manoeuvre (103) couplé à pivotement avec l'organe fixe **caractérisé en ce qu'**une paire de saillies d'entraînement (121) est formée sur l'organe d'entraînement et une paire de surfaces inclinées (135) est formée sur l'organe de manoeuvre, de sorte que quand l'organe d'entraînement (102) tourne, une des saillies d'entraînement (121) entre en contact avec une surface inclinée (135) correspondante de l'organe de manoeuvre (103), de manière à entraîner le pivotement de l'organe de manoeuvre (103).

2. Touche à double sens selon la revendication 1, comprenant de plus une pluralité de boutons-poussoirs, chacun de la pluralité de boutons-poussoirs étant positionné sur un côté latéral d'un axe de pivot (P) de l'organe de manoeuvre (103), touche dans laquelle, lorsque l'organe de manoeuvre pivote, au moins un parmi la pluralité de boutons-poussoirs est manoeuvré.

3. Touche à double sens selon la revendication 1, comprenant de plus une pluralité de commutateurs à dôme, chacun de la pluralité de commutateurs à dôme étant positionné sur un côté latéral d'un axe de pivot (P) de l'organe de manoeuvre (103), touche dans laquelle, lorsque l'organe de manoeuvre pivote, au moins un parmi la pluralité de commutateurs à dôme est manoeuvré.

4. Touche à double sens selon la revendication 1, comprenant de plus une pluralité de rainures d'échappement (137) formées sur l'organe de manoeuvre (103), chacune des rainures d'échappement contactant une extrémité d'un élément de la paire de surfaces inclinées (135) et étant positionnée sur un trajet de déplacement d'un élément de la paire de saillies d'entraînement (121), respectivement.

5. Touche à double sens selon la revendication 4, dans laquelle, si une des saillies d'entraînement (121) entre en contact avec la surface inclinée respective en faisant tourner l'organe d'entraînement (102), la rainure d'échappement (137) fournit un espace dans lequel l'autre saillie d'entraînement peut être positionnée.

6. Touche à double sens selon la revendication 1, comprenant de plus une paire de nervures de renfort (113) qui sont formées sur une base de l'organe fixe (101) et qui s'étendent en se faisant face, une pluralité de trous de pivot (115), chacun des trous de pivot de la pluralité étant ménagé dans une nervure de renfort de la paire, respectivement, et une pluralité de saillies de pivot (131), chacune des saillies de pivot de la pluralité étant formée sur un côté de l'organe de manoeuvre (103), respectivement, touche dans laquelle les saillies de pivot sont couplées à rotation avec les trous de pivot, respectivement.

7. Touche à double sens selon la revendication 6, comprenant de plus un bouton rotatif (104) couplé à une extrémité de l'organe d'entraînement (102), touche dans laquelle l'organe d'entraînement passe à travers la base de l'organe fixe (101) de manière à être assemblé avec le bouton rotatif.

8. Touche à double sens selon la revendication 7, dans laquelle le bouton rotatif (104) est couplé à l'extrémité de l'organe d'entraînement (102) par une vis (145).

9. Touche à double sens selon la revendication 8, dans laquelle la vis (145) passe à travers le bouton rotatif (104) depuis une extrémité du bouton rotatif, de manière à être couplée à l'organe d'entraînement (102).

10. Touche à double sens selon la revendication 9, comprenant de plus un cache décoratif (149) monté à l'extrémité du bouton rotatif (104) pour couvrir une portion à laquelle la vis (145) est couplée.

11. Touche à double sens selon la revendication 1, comprenant de plus une pluralité d'organes de commutation (109), chacun des organes de commutation de la pluralité étant positionné sur un côté de l'organe de manoeuvre (103) et positionné symétriquement, en étant centré, sur un axe de pivot (P) de l'organe de manoeuvre, touche dans laquelle, lorsque l'organe de manoeuvre pivote, un des organes de commutation est manoeuvré.

12. Touche à double sens selon la revendication 11, dans laquelle, si l'organe d'entraînement (102) tourne approximativement de 40 degrés, l'organe de manoeuvre (103) pivote et manoeuvre au moins un organe de commutation (109) parmi la pluralité.

13. Terminal portable incluant une touche à double sens (100) selon la revendication 1.

14. Terminal portable selon la revendication 13, comprenant de plus une pluralité de commutateurs, chaque commutateur de la pluralité étant positionné sur un côté latéral d'un axe de pivot (P) de l'organe de manoeuvre (103), terminal dans lequel, lorsque l'organe de manoeuvre pivote, au moins un commutateur (109) parmi la pluralité est manoeuvré.

15. Terminal portable selon la revendication 14, dans lequel chacun de la pluralité de commutateurs (109) comprend au moins un bouton-poussoir et un commutateur à dôme.

16. Terminal portable selon la revendication 13, comprenant de plus une pluralité de rainures d'échappement (137) formées sur l'organe de manoeuvre (103), chacune des rainures d'échappement contactant une extrémité d'un élément de la paire de surfaces inclinées (135) et étant positionnée sur un trajet de déplacement d'un élément de la paire de saillies d'entraînement (121), respectivement.

17. Terminal portable selon la revendication 16, dans lequel, si une des saillies d'entraînement (121) entre en contact avec la surface inclinée respective (135) en faisant tourner l'organe d'entraînement, la rainure d'échappement (137) fournit un espace dans lequel l'autre saillie d'entraînement peut être positionnée.

18. Terminal portable selon la revendication 13, comprenant de plus une paire de nervures de renfort (113) formées sur une base de l'organe fixe (101) et qui s'étendent en se faisant face, une pluralité de trous de pivot (115), chacun des trous de pivot de la pluralité étant ménagé dans une nervure de renfort de la paire, respectivement, et une pluralité de saillies de pivot (131), chacune des saillies de pivot de la pluralité étant formée sur un côté de l'organe de manoeuvre (103), respectivement, terminal dans lequel les saillies de pivot sont couplées à rotation avec les trous de pivot, respectivement.
